# EUROPÄISCHE PATENTSCHRIFT

(11) **EP 2 905 854 B1**
(45) Veröffentlichungstag und Bekanntmachung des Hinweises auf die Patenterteilung: **01.03.2023**
(21) Anmeldenummer: 15152235.6
(22) Anmeldetag: 23.01.2015
(51) Int. Cl.: H02B 13/00, H02B 13/035, H02G 5/06

(54) **Kapazitive Spannungsmessvorrichtung und eine Sammelschienenanordnung einer Schaltanlage und Schaltanlage**
Capacitive voltage measuring device and a busbar device of a switchgear assembly and switchgear assembly
Dispositif de mesure de tension capacitif et un agencement de barre collectrice d'une installation de commutation et installation de commutation

(30) Priorität: 07.02.2014 DE 102014202258
(43) Veröffentlichungstag der Anmeldung: 12.08.2015
(73) Patentinhaber: Siemens Aktiengesellschaft, 80333 München (DE)
(72) Erfinder: Becht, Dominik, 68219 Mannheim (DE); Ermeler, Kristian, 60388 Frankfurt am Main (DE); Harbecke, Günter, 63776 Mömbris (DE); Hohmann, Stefan, 36100 Petersberg (DE); Horz, Christof, 56414 Salz (DE)

(56) Entgegenhaltungen:
- EP-A1- 1 653 582
- WO-A1-2013/060517
- WO-A2-2004/034535
- DE-A1- 2 125 297
- DE-A1- 2 325 440
- DE-A1- 2 930 672
- DE-A1- 10 012 068
- DE-B3-102006 015 310
- DE-C1- 10 119 333
- FR-A1- 2 230 052
- JP-A- S60 160 308

## Beschreibung

Die Erfindung betrifft eine kapazitive Spannungsmessvorrichtung und eine Sammelschienenanordnung einer Schaltanlage.

Schaltanlagen, insbesondere gasisolierte Mittelspannungsschaltanlagen sind aus dem landläufigen Stand der Technik bekannt und weisen mehrere Schaltfelder auf, wobei jedes Schaltfeld der Schaltanlage einen Sammelschienenraum aufweist, wobei sich Sammelschienen durch die Sammelschienenräume der einzelnen Schaltfelder durch die gesamte Schaltanlage hindurch erstrecken. Bei gasisolierten Schaltanlagen können diese Sammelschienenräume ebenfalls mit einem Isoliergas, beispielsweise SF₆, befüllt sein, so dass eine Sammelschienenanordnung in Form einer Sammelschienenkupplung an den Verbindungsstellen einzelner Schalterfelder bzw. in Form eines Sammelschienenabschlusses am letzten Feld der Schaltanlage vorgesehen werden muss, mit welcher Sammelschienenanordnung eine Verbindung der einzelnen Schalterfelder der Schaltanlage bzw. ein Abschluss der Sammelschiene am letzten Schaltfeld der Schaltanlage ausgebildet werden kann, durch die ein gasdichter Abschluss der einzelnen Schalterfelder bei gleichzeitiger Teilentladungsfreiheit gewährleistet ist.

Es ist weiterhin aus dem landläufigen Stand der Technik bekannt, eine kapazitive Spannungsmessvorrichtung an einer Sammelschienenanordnung in Form eines Sammelschienenabschlusses anzuordnen, mit der über einen kapazitiven Spannungsteiler die Spannung der Sammelschiene bestimmt werden kann bzw. insbesondere auch die Spannungsfreiheit der Sammelschiene mit einem geeigneten Messgerät bestimmt werden kann.

Aus der DE 101 19 333 c1 ist bekannt, dass Verschlüsse für Sammelschienen mit einer kapazitiven Messanordnung versehen sein können. Die DE 2325440 A1 offenbart einen Messwandler für eine Kondensatordurchführung, wobei die Kondensatordurchführung ausgestaltet ist, in einer Schottwand innerhalb einer Metallkapselung angeordnet zu sein.

Aus der JS S 60 160308 A ist weiter bekannt, dass neben einer konventionellen Messanordnung an einer gasisolierten Stromschiene auch eine in Epoxy angeordnete Messanordnung möglich ist.

Aufgabe der vorliegenden Erfindung ist es, eine kapazitive Spannungsmessvorrichtung und eine Sammelschienenanordnung einer Schaltanlage auszubilden, welche über einen einfachen und kostengünstigen Aufbau verfügt.

Erfindungsgemäß gelöst wird dies durch eine kapazitive Spannungsmessvorrichtung, und eine Sammelschienenanordnung einer Schaltanlage, gemäß Anspruch 1, wobei die Sammelschienenanordung als Sammelschienenabschluss ausgebildet ist und welche Spannungsmessvorrichtung ein an einem äußeren Feldsteuerelement der Sammelschienenanordnung angeordnetes Anschlusselement sowie eine mit dem Anschlusselement verbindbare und durch ein Dichtungselement der Sammelschienenanordnung hindurchgeführte Anschlussleitung zum Verbinden mit einem Spannungsanzeigegerät aufweist. Weiter ist entweder das äußere Feldsteuerelement durch einen an einem zur Feldsteuerung vorgesehenen Isolierkörper der Sammelschienenanordnung (1, 20) angeordneten Volumenkörper gebildet, oder das äußere Feldsteuerelement ist durch eine auf einem Isolierkörper der Sammelschienenanordnung aufgebrachte Leitlackschicht gebildet, und der Sammelschienenabschluss (20) ist mittels einer Dichtkappe (23) aus isolierendem Material abgedichtet.

Mit anderen Worten umfasst die kapazitive Spannungsmessvorrichtung ein Anschlusselement, welches an einem äußeren Feldsteuerelement der Sammelschienenanordnung angeordnet ist, sowie eine mit dem Anschlusselement verbindbare und durch ein Dichtungselement der Sammelschienenanordnung hindurchgeführte Anschlussleitung, welche mit einem Spannungsanzeigegerät verbunden wird, wobei durch das äußere Feldsteuerelement der Sammelschienenanordnung, welches im Falle der Verwendung bei einer kapazitiven Spannungsmessvorrichtung nicht wie sonst üblich auf Erdpotential liegt, und einen Sammelschienenleiter der Sammelschienenanordnung eine erste Kapazität gebildet ist und durch das Spannungsanzeigegerät eine zweite Kapazität gebildet ist, welche miteinander in Reihe geschaltet sind, so dass über die Bestimmung der Spannung am Spannungsanzeigegerät eine Bestimmung der Spannung der Sammelschienenanordnung ermöglicht ist. Die Ausbildung der kapazitiven Spannungsmessvorrichtung mit dem an dem äußeren Feldsteuerelement der Sammelschienenanordnung angeordneten Anschlusselement führt dabei zu einem einfachen und kostengünstigen Aufbau, weil insbesondere keine separaten einzubauenden leitfähigen Teile nötig sind, an welchen ein Spannungsabgriff möglich wäre, sondern bei einer Sammelschienenanordnung sowieso vorhandene leitfähige Bauteile in Form von äußeren Feldsteuerelementen für die kapazitive Spannungsmessvorrichtung verwendet werden.

Weiterhin ist mit der erfindungsgemäßen kapazitiven Spannungsmessvorrichtung sowohl an einem Sammelschienenabschluss als auch an einer Sammelschienenkupplung eine Spannungsmessung möglich. Durch die Spannungsbestimmung an der Sammelschienenkupplung ist es dabei in einfacher und vorteilhafter Weise möglich, eine Schaltanlage um ein oder mehrere Schaltfelder zu erweitern, ohne dass dazu die Messstelle versetzt werden muss.

In einer vorteilhaften Ausgestaltung der Erfindung ist das äußere Feldsteuerelement durch einen an einem zur Feldsteuerung vorgesehenen Isolierkörper der Sammelschienenanordnung angeordneten Volumenkörper gebildet. Die Sammelschienenanordnung bei gekapselten oder gasisolierten Mittelspannungsschaltanlagen umfasst üblicherweise einen Isolierkörper, welcher mit einem inneren Feldsteuerelement, welches auf dem Potential des Sammelschienenleiters der Sammelschienenanordnung liegt, versehen ist, sowie ein äußeres Feldsteuerelement, welches vorteilhafterweise als Volumenkörper ausgebildet ist, wobei Volumenkörper im Sinne der vorliegenden Erfindung einen Körper mit einer dreidimensionalen Ausdehnung meint, so dass ein elektrisches Feld, welches sich durch das Hochspannungspotential des Sammelschienenleiters gegenüber einem äußeren Erdpotential ausbildet, innerhalb des Isolierkörpers der Sammelschienenanordnung zwischen den Feldsteuerelementen abgesteuert werden kann. Im Falle der Verwendung des äußeren Feldsteuerelementes zur kapazitiven Spannungsmessvorrichtung liegt dabei das äußere Feldsteuerelement bei diesen Messzwecken nicht auf Erdpotential.

In weiterer vorteilhafter Ausgestaltung der Erfindung ist eine Verbindung des Anschlusselementes mit der Anschlussleitung durch eine Steckverbindung gebildet. Eine Steckverbindung bietet eine einfache und kostengünstige Möglichkeit, dass Anschlusselement mit der Anschlussleitung zu verbinden.

In einer besonders bevorzugten Ausführungsform der Erfindung ist das Anschlusselement durch ein in das äußere Feldsteuerelement eingebettetes elektrisch leitfähiges Teil gebildet, wobei die Anschlussleitung ein Steckelement zum Ausbilden der Steckverbindung mit dem elektrisch leitfähigen Teil aufweist. Das eingebettete elektrisch leitfähige Teil kann beispielsweise durch ein eingegossenes Metallteil gebildet sein.

In einer anderen vorteilhaften Ausgestaltung der Erfindung ist das Anschlusselement durch eine Aufnahme im äußeren Feldsteuerelement gebildet, wobei die Anschlussleitung einen Stecker zum Ausbilden der Steckverbindung mit der Aufnahme aufweist. Durch diese Ausgestaltungen sind in einfacher und kostengünstiger Weise Steckverbindungen zwischen dem Anschlusselement und der Anschlussleitung ausbildbar.

In einer anderen vorteilhaften Ausgestaltung der Erfindung ist das äußere Feldsteuerelement durch eine auf einen Isolierkörper der Sammelschienenanordnung aufgebrachte Leitlackschicht gebildet. Mit anderen Worten ist das äußere Feldsteuerelement in Form einer auf den Isolierkörper aufgebrachten Leitlackschicht ein Feldsteuerelement mit einer im Wesentlichen zweidimensionalen Struktur, wodurch ebenfalls in einfacher und wirksamer Weise ein Feldsteuerelement ausbildbar ist.

In besonders bevorzugter Ausführungsform ist die Verbindung von Anschlusselement und Anschlussleitung durch eine Klemm- oder Schraubverbindung gebildet. Bei einem durch eine Leitlackschicht gebildeten äußeren Feldsteuerelement ist es in einfacher Weise möglich, das Anschlusselement mittels einer Klemm- oder Schraubverbindung mit einer Anschlussleitung zu verbinden.

Die Erfindung betrifft weiterhin eine Schaltanlage mit einer kapazitiven Messvorrichtung nach einer der obigen Ausführungsformen.

Die Erfindung wird im Folgenden anhand der Zeichnung sowie eines Ausführungsbeispiels mit Bezug auf die beiliegenden Figuren näher erläutert. Es zeigen:
- Figur 1:: ein erstes nicht erfindungsgemäßes Ausführungsbeispiel einer kapazitiven Spannungsmessvorrichtung bei einer Sammelschienenkupplung als Sammelschienenanordnung; und
- Figur 2:: ein zweites Ausführungsbeispiel einer kapazitiven Spannungsmessvorrichtung bei einem Sammelschienenabschluss als Sammelschienenanordnung.

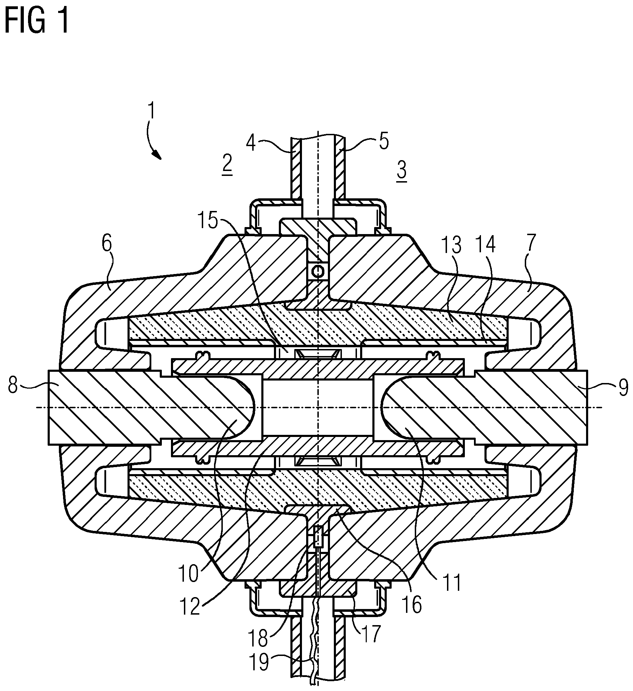

Figur 1 zeigt eine Sammelschienenkupplung 1 als Sammelschienenanordnung für eine figürlich nicht weiter dargestellte gasisolierte Mittelspannungsschaltanlage mit einem ersten Schaltfeld 2 sowie einem zweiten Schaltfeld 3, wobei das erste Schaltfeld 2 eine Schaltfeldwand 4 und das zweite Schaltfeld 3 eine Schaltfeldwand 5 aufweist. Giessharzkörper 6 bzw. 7 sind in die Schaltfeldwände 4 bzw. 5 eingelassen und mit diesen gasdicht verbunden, durch welche Giessharzkörper 6 bzw. 7 sich Sammelschienenleiter 8 bzw. 9 aus einem figürlich nicht weiter dargestellten Sammelschienenraum des jeweiligen Schaltfeldes erstrecken. Der Sammelschienenleiter 8 weist ein sich außerhalb des ersten Schaltfeldes 2 befindliches Ende 10 auf, der Sammelschienenleiter 9 weist ein sich außerhalb des zweiten Schaltfeldes 3 befindliches Ende 11 auf. Ein Verbindungselement 12 ist zum elektrisch leitenden Verbinden des Endes 10 des Sammelschienenleiters 8 mit dem Ende 11 des Sammelschienenleiters 9 vorgesehen. Ein Isolierkörper 13 weist ein inneres Feldsteuerelement 14 auf, welches über Verbindungsmittel 15 in leitender Verbindung mit dem Verbindungselement 12 steht und damit auf dem Potential der Sammelschienenleiter 8 und 9 liegt. Ein äußeres Feldsteuerelement 16 ist außen am Isolierkörper 13 vorgesehen und weist eine körperliche Gestalt auf und ist damit als Volumenkörper ausgebildet und im Ausführungsbeispiel in den Isolierkörper 13 eingegossen und damit an diesen angeordnet. Ein Dichtungselement 17 ist vorgesehen zum Abdichten der Sammelschienenkupplung 1 bzw. des Verbindungsbereiches gegenüber äußeren Umwelteinflüssen. Am äußeren Feldsteuerelement 16 angeordnet ist ein Anschlusselement 18, welches im Ausführungsbeispiel durch ein in das äußere Feldsteuerelement 16 eingebettetes elektrisch leitfähiges Teil, beispielsweise in Form eines eingegossenen Metallteiles, gebildet ist. Eine Anschlussleitung 19 erstreckt sich durch das Dichtungselement 17 zum Anschlusselement 18 und weist ein Steckelement auf, welches zum Ausbilden einer Steckverbindung mit dem aus einem eingebetteten elektrisch leitfähigen Teil gebildeten Anschlusselement 18 vorgesehen ist. Die Anschlussleitung 19 ist mit einem figürlich nicht weiter dargestellten Spannungsanzeigegerät verbunden, so dass durch das äußere Feldsteuerelement 16 und die Sammelschienenleiter 8 und 9 mit dem Isolierkörper 13 eine erste Kapazität gebildet ist, wobei das Spannungsanzeigegerät eine zweite Kapazität aufweist, so dass durch die erste Kapazität und die zweite Kapazität ein kapazitiver Spannungsteiler gebildet ist, mit dem eine Bestimmung der Spannung an der Sammelschienenanordnung ermöglicht ist.

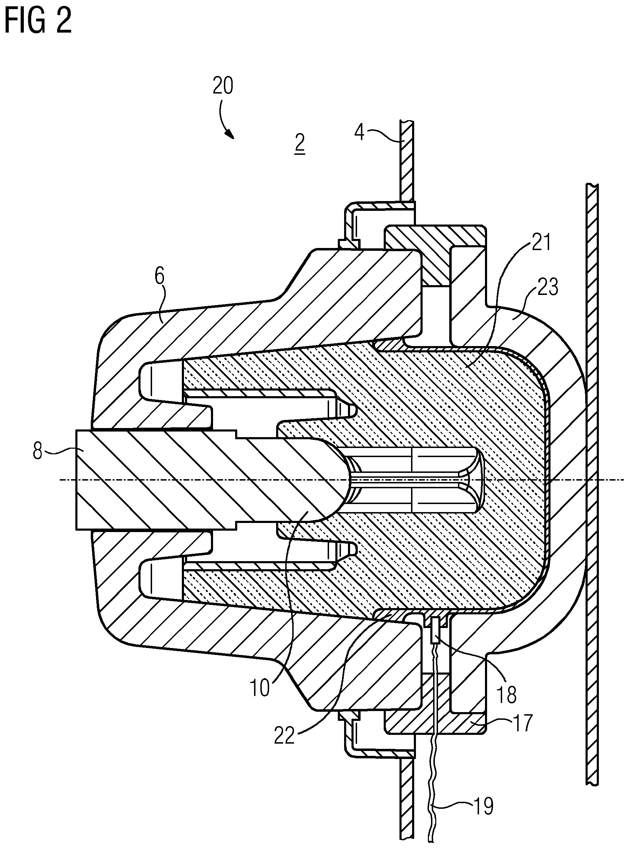

Figur 2 zeigt eine kapazitive Spannungsmessvorrichtung für eine Sammelschienenanordnung in Form eines Sammelschienenabschlusses 20, welcher am Ende einer Schaltanlage am letzten Schaltfeld vorgesehen ist, um die Sammelschiene gegenüber dem Außenraum der Schaltanlage spannungsfest abzuschließen. Mit Bezug auf die Figur 1 beschriebene Bauteile des Sammelschienenabschlusses 20 sind mit gleichen Bezugszeichen versehen und werden daher nicht weiter erläutert. Der Sammelschienenabschluss 20 weist einen Isolierkörper 21 zum Abschluss auf, auf welchem Isolierköper 21 ein äußeres Feldsteuerelement 22 aufgegossen und damit am Isolierkörper 21 angeordnet ist, welches äußere Feldsteuerelement 22 ebenfalls eine dreidimensionale Gestalt aufweist und damit einen Volumenkörper bildet. Das Anschlusselement 18 ist in Form eines elektrisch leitfähiges Teils in das äußere Feldsteuerelement 22 eingebettet, beispielsweise eingegossen, wobei sich die Anschlussleitung 19 durch das Dichtungselement 17 hindurch zum Anschlusselement 18 erstreckt und ein figürlich nicht weiter ausgeführtes Steckelement zum Verbinden mit dem Anschlusselement 18 aufweist, wobei die Anschlussleitung 19 wie bereits mit Bezug auf die Figur 1 beschrieben, mit einem Spannungsanzeigegerät verbindbar ist, so dass hier ebenfalls über das äußere Feldsteuerelement 22 und den Sammelschienenleiter 8 mit dem Isolierkörper 21 eine erste Kapazität ausgebildet ist, welche zusammen mit der zweiten Kapazität des Spannungsanzeigegerätes einen kapazitiven Spannungsteiler zum Bestimmen der an dem Sammelschienenleiter 8 anliegenden Spannung ermöglicht. Der Sammelschienenabschluss 20 ist mittels einer Dichtkappe 23 aus isolierendem Material abgedichtet.

In den Figuren 1 und 2 ist das Anschlusselement 18 jeweils als in das äußere Feldsteuerelement 16 bzw. 22 eingebettetes elektrische leitfähiges Teil dargestellt, wobei die Anschlussleitung 19 ein entsprechendes Steckelement aufweist. Es ist jedoch auch möglich, im äußeren Feldsteuerelement eine Aufnahme vorzusehen, wobei dann die Anschlussleitung einen entsprechenden Stecker aufweist, welcher zum Ausbilden der Steckverbindung mit der Aufnahme ausgebildet ist. Ebenfalls ist es möglich, im Falle eines nicht als Volumenkörper ausgebildeten äußeren Feldsteuerelementes, beispielsweise in Form einer Leitlackschicht, eine Verbindung zwischen einem Anschlusselement des äußeren Feldsteuerelementes und der Anschlussleitung durch eine Klemm- oder Schraubverbindung auszubilden.

### Bezugszeichenliste

- 1: Sammelschienenkupplung
- 2: erstes Schaltfeld
- 3: zweites Schaltfeld
- 4, 5: Schaltfeldwand
- 6, 7: Giessharzkörper
- 8, 9: Sammelschienenleiter
- 10, 11: Ende
- 12: Verbindungselement
- 13: Isolierkörper
- 14: inneres Feldsteuerelement
- 15: Verbindungsmittel
- 16: äußeres Feldsteuerelement
- 17: Dichtungselement
- 18: Anschlusselement
- 19: Anschlussleitung
- 20: Sammelschienenabschluss
- 21: Isolierkörper
- 22: äußeres Feldsteuerelement
- 23: Dichtkappe

## Patentansprüche

1. Kapazitive Spannungsmessvorrichtung und eine Sammelschienenanordnung (20) einer Schaltanlage, welche Spannungsmessvorrichtung ein an einem äußeren Feldsteuerelement (22) der Sammelschienenanordnung (20) angeordnetes Anschlusselement (18) sowie eine mit dem Anschlusselement (18) verbindbare und durch ein Dichtungselement (17) der Sammelschienenanordnung (20) hindurchgeführte Anschlussleitung (19) zum Verbinden mit einem Spannungsanzeigegerät aufweist, wobei die Sammelschienenanordung als Sammelschienenabschluss ausgebildet ist und wobei durch das äußere Feldsteuerelement (22) der Sammelschienenanordnung (20), welches im Falle der Verwendung bei einer kapazitiven Spannungsmessvorrichtung nicht auf Erdpotential liegt, und einen Sammelschienenleiter der Sammelschienenanordnung (20) eine erste Kapazität gebildet ist und durch das Spannungsanzeigegerät eine zweite Kapazität gebildet ist, wobei erste und zweite Kapazität miteinander in Reihe geschaltet sind, so dass über die Bestimmung der Spannung am Spannungsanzeigegerät eine Bestimmung der Spannung der Sammelschienenanordnung (20) ermöglicht ist, wobei
- das äußere Feldsteuerelement (22) durch einen an einem zur Feldsteuerung vorgesehenen Isolierkörper (21) der Sammelschienenanordnung 20) angeordneten Volumenkörper gebildet ist, oder
- das äußere Feldsteuerelement durch eine auf einem Isolierkörper der Sammelschienenanordnung aufgebrachte Leitlackschicht gebildet ist,
**dadurch gekennzeichnet, dass**
der Sammelschienenabschluss (20) mittels einer Dichtkappe (23) aus isolierendem Material abgedichtet ist.

2. Kapazitive Spannungsmessvorrichtung und eine Sammelschienenanordnung nach Anspruch 1,
**dadurch gekennzeichnet, dass**
eine Verbindung des Anschlusselementes (18) mit der Anschlussleitung (19) durch eine Steckverbindung gebildet ist.

3. Kapazitive Spannungsmessvorrichtung und eine Sammelschienenanordnung nach Anspruch 2,
**dadurch gekennzeichnet, dass**
das Anschlusselement (18) durch ein in das äußere Feldsteuerelement (22) eingebettetes elektrische leitfähiges Teil gebildet ist, wobei die Anschlussleitung (19) ein Steckelement zum Ausbilden der Steckverbindung mit dem elektrisch leitfähigen Teil aufweist.

4. Kapazitive Spannungsmessvorrichtung und eine Sammelschienenanordnung nach Anspruch 2,
**dadurch gekennzeichnet, dass**
das Anschlusselement (18) durch eine Aufnahme im äußeren Feldsteuerelement (22) gebildet ist, wobei die Anschlussleitung (19) einen Stecker zum Ausbilden der Steckverbindung mit der Aufnahme aufweist.

5. Kapazitive Spannungsmessvorrichtung und eine Sammelschienenanordnung nach Anspruch 1,
**dadurch gekennzeichnet, dass**
eine Verbindung von Anschlusselement und Anschlussleitung durch eine Klemm- oder Schraubverbindung gebildet ist.

6. Schaltanlage mit einer kapazitiven Spannungsmessvorrichtung und einer Sammelschienenanordnung nach einem der Ansprüche 1 bis 5.

## Claims

1. Capacitive voltage measuring apparatus and a busbar arrangement (20) of a switchgear assembly, which voltage measuring apparatus has a connection element (18), which is arranged on an outer field control element (22) of the busbar arrangement (20), and a connection line (19), which is connectable to the connection element (18) and is passed through a sealing element (17) of the busbar arrangement (20), for connection to a voltage indicator device, wherein the busbar arrangement is designed as a busbar termination, and wherein a first capacitance is formed by the outer field control element (22) of the busbar arrangement (20), which, when used in a capacitive voltage measuring apparatus, is not at earth potential, and a busbar conductor of the busbar arrangement (20), and a second capacitance is formed by the voltage indicator device, wherein first and second capacitance are connected in series with one another such that it is possible to determine the voltage of the busbar arrangement (20) by determining the voltage at the voltage indicator device, wherein
- the outer field control element (22) is formed by a volumetric body arranged on an insulating body (21) of the busbar arrangement (20), said insulating body being provided for field control, or
- the outer field control element is formed by a conducting varnish layer applied to an insulating body of the busbar arrangement,
**characterized in that**
the busbar termination (20) is sealed off by means of a sealing cap (23) consisting of insulating material.

2. Capacitive voltage measuring apparatus and a busbar arrangement according to Claim 1,
**characterized in that**
a connection between the connection element (18) and the connection line (19) is formed by a plug-type connection.

3. Capacitive voltage measuring apparatus and a busbar arrangement according to Claim 2,
**characterized in that**
the connection element (18) is formed by an electrically conductive part embedded in the outer field control element (22), wherein the connection line (19) has a plug-type element for forming the plug-type connection with the electrically conductive part.

4. Capacitive voltage measuring apparatus and a busbar arrangement according to Claim 2,
**characterized in that**
the connection element (18) is formed by a receptacle in the outer field control element (22), wherein the connection line (19) has a plug for forming the plug-type connection with the receptacle.

5. Capacitive voltage measuring apparatus and a busbar arrangement according to Claim 1,
**characterized in that**
a connection between the connection element and the connection line is formed by a clamping or screw-type connection.

6. Switchgear assembly comprising a capacitive voltage measuring apparatus and a busbar arrangement according to one of Claims 1 to 5.

## Revendications

1. Dispositif capacitif de mesure de la tension et agencement (20) de barre collectrice d'une installation de distribution, lequel dispositif de mesure de la tension a un élément (18) de connexion monté sur un élément (22) extérieur de commande de champ de l'agencement (20) de barre collectrice, ainsi qu'une ligne (19) de connexion, qui peut être reliée à l'élément (18) de connexion, qui peut passer à travers un élément (17) d'étanchéité de l'agencement (20) de barre collectrice et qui est connectée à un appareil d'indication de la tension, dans lequel l'agencement de barre collectrice est constitué sous la forme d'une terminaison de barre collectrice et dans lequel, par l'élément (22) extérieur de commande de champ de l'agencement (20) de barre collectrice, qui, dans le cas de l'utilisation dans un dispositif capacitif de mesure de la tension, n'est pas au potentiel de terre, et par un conducteur de barre collectrice de l'agencement (20) de barre collectrice, il est formé une première capacité et, par l'appareil d'indication de la tension, il est formé une deuxième capacité, dans lequel la première et la deuxième capacités sont montées entre elles en série, de manière à rendre possible, par la détermination de la tension sur l'appareil d'indication de la tension, une détermination de la tension de l'agencement (20) de barre collectrice, dans lequel
- l'élément (22) extérieur de commande de champ est formé d'un corps ayant du volume monté sur un corps (21) isolant, prévu pour la commande de champ, de l'agencement (20) de barre collectrice, ou
- l'élément extérieur de commande de champ est formé d'une couche de vernis conducteur déposée sur un corps isolant de l'agencement de barre collectrice,
**caractérisé en ce que**
la terminaison (20) de barre collectrice est rendue étanche au moyen d'une coiffe (23) d'étanchéité en matériau isolant.

2. Dispositif capacitif de mesure de la tension et agencement de barre collectrice suivant la revendication 1,
**caractérisé en ce qu'**
une liaison de l'élément (18) de connexion à la ligne (19) de connexion est formée par une liaison à enfichage.

3. Dispositif capacitif de mesure de la tension et agencement de barre collectrice suivant la revendication 2,
**caractérisé en ce que**
l'élément (18) de connexion est formé d'une partie conductrice de l'électricité incorporée dans l'élément (22) extérieur de commande de champ, dans lequel la ligne (19) de connexion a un élément d'affichage pour la constitution de la liaison par enfichage avec la partie conductrice de l'électricité.

4. Dispositif capacitif de mesure de la tension et agencement de barre collectrice suivant la revendication 2,
**caractérisé en ce que**
l'élément (18) de connexion est formé d'un logement dans l'élément (22) extérieur de commande de champ, dans lequel la ligne (19) de connexion a un connecteur pour la constitution de la liaison par enfichage par le logement.

5. Dispositif capacitif de mesure de la tension et agencement de barre collectrice suivant la revendication 1,
**caractérisé en ce qu'**
une liaison de l'élément de connexion et de la ligne de connexion est formée par un serrage ou un vissage.

6. Installation de distribution ayant un dispositif capacitif de mesure de la tension et un agencement de barre collectrice suivant l'une des revendications 1 à 5.
